# EUROPÄISCHE PATENTSCHRIFT

(11) **EP 1 515 661 B1**
(45) Veröffentlichungstag und Bekanntmachung des Hinweises auf die Patenterteilung: **04.10.2006**
(21) Anmeldenummer: 03729845.2
(22) Anmeldetag: 16.04.2003
(51) Int. Cl.: A61C 8/00

(54) **CHIRURGISCHES INSTRUMENT**
SURGICAL INSTRUMENT
INSTRUMENT CHIRURGICAL

(30) Priorität: 27.06.2002 DE 10228692
(43) Veröffentlichungstag der Anmeldung: 23.03.2005
(73) Patentinhaber: Fuchs, Ernst, 8800 Thalwil (CH)
(72) Erfinder: Fuchs, Ernst, 8800 Thalwil (CH)
(74) Vertreter: Pöhner, Wilfried Anton, Dr.
(86) Internationale Anmeldenummer: PCT/DE2003/001284
(87) Internationale Veröffentlichungsnummer: WO 2004/002355

(56) Entgegenhaltungen:
- US-A- 5 997 298

## Beschreibung

Die Erfindung betrifft ein chirurgisches Instrument zur Aufbereitung von Implantatbetten im Unterkiefer und ein Verfahren zur Herstellung des Bettes mit einem dornförmig ausgebildeten Bohrelement und einem daran befestigten Handgriff, wobei das Bohrelement einen ersten Kegelstumpf umfaßt, dessen Mantellinie einen Winkel von maximal einigen Graden mit der Achse des Kegelstumpfes einschließt, und dessen Mantelfläche glatt ausgebildet ist.

Prothetische Zähne werden in der Regel an Implantatpfosten befestigt, die in einem geeigneten Implantatbett im Kiefer des Patienten verankert sind. Bei einer Implantation im Unterkiefer wird dieses Bett üblicherweise dadurch hergestellt, daß der Knochen an der für die Implantation vorgesehenen Stelle schrittweise mit Bohrern zunehmenden Durchmessers entfernt wird. Dabei legen die Abmessungen des in dieser Reihe größten Bohrers den Durchmesser und die Länge des einzusetzenden Implantats fest. In das fertigte Bett werden schließlich Implantate mit einem Presssitz oder einem Schraubgewinde eingesetzt. Bei Implantationen in Bereichen des Unterkiefers, die eine zur Aufnahme der vorgesehenen Implantate ausreichende Knochensubstanz von ausreichenden Güte aufweisen, führt diese Methode nach dem Stand der Technik zu brauchbaren Ergebnissen.

Aufgrund der Anatomie des Unterkiefers etlicher Patienten oder einer Schwächung des Kiefers beispielsweise infolge Atrophie sind einer Implantation nach dem dargelegten Verfahren jedoch Grenzen gesetzt. In derartigen Fällen läßt die vorhandene Knochensubstanz eine stabile Verankerung von Implantatpfosten ausreichender Länge ohne Anwendung weiterer Maßnahmen nicht zu. Es besteht daher der Bedarf an geeigneten chirurgischen Instrumenten und Verfahren, welche zu einer qualitativ besseren Aufbereitung des Implantatbettes führen als durch Bohren gemäß der bekannten Verfahren möglich ist.

Aus der US-A 5,997,298 ist bereits ein chirurgisches Instrument zur Aufbereitung von Implantatbetten im Unterkiefer bekannt, welches aus einem dornförmig ausgebildeten Bohrelement und einem daran befestigten Handgriff besteht. Das Bohrelement ist von der Gestalt eines Kegelstumpfes, dessen Mantellinie einen Winkel von wenigen Graden mit der Achse des Kegelstumpfes anschließt. Dabei ist die Achse des Handgriffes mit der des Kegelstumpfes koaxial.

Der Erfindung liegt die Aufgabe zugrunde, Mittel zur Aufbereitung eines Implantationsbettes im Unterkiefer und ein Verfahren zur Herstellung des Bettes anzugeben, welche eine lokale Verbesserung der Knochenqualität und/oder der lokalen Anatomie bewirken und daher eine stabile Verankerung der Implantate, insbesondere auch bei problematischer Knochensubstanz, ermöglichen. Darüber hinaus zeichnet sich die erfindungsgemäße Lösung auch dadurch aus, daß die vorgeschlagenen Instrumente einfach zu handhaben sind und einen sehr atraumatischen Eingriff ermöglichen, das vorgeschlagene Verfahren eine Ausheilung der Implantationsstelle in kurzer Zeit sicherstellt und eine hohe Erfolgsquote aufweist.

Diese Aufgabe wird hinsichtlich des erfindungsgemäßen, chirurgischen Elementes dadurch gelöst, dass der Handgriff in einem Winkel zur Achse des genannten Kegelstumpfes angeordnet ist und in verfahrensmäßiger Sicht durch ein Verfahren mit folgenden Verfahrensschritten:
a) Festlegung der Richtung und Tiefe der Implantation durch eine Pilotbohrung mittels eines ersten Spiralbohrers
b) Aufbohren der Corticalis (Deckknochen) auf einen zur Durchführung des nächsten oder mehrerer der nächsten Arbeitsschritte erforderlichen Durchmesser mittels eines weiteren Spiralbohrers größeren Durchmessers
c) Aufweitung der in der Spongiosa (Füllknochen) vorhandenen Öffnung mittels des genannten chirurgischen Instrumentes
d) ggf. Wiederholung der Schritte b) und c) unter Verwendung eines Instrumentes, dessen erster Kegelstumpf jedoch eine Deckfläche größeren Durchmessers als das jeweils zuvor benutzte Instrument aufweist.

Zur Herstellung eines Implantatbettes wird bei dem vorgeschlagenen Verfahren zunächst eine Pilotbohrung in den Unterkiefer eingebracht.

Diese Bohrung legt Richtung und Tiefe des vorgesehenen Implantats fest. Sie wird mit einem an sich bekannten Spiralbohrer kleinen Durchmessers durchgeführt, der mit hoher Tourenzahl läuft und eine Innenkühlung aufweist. In einem anschließenden Schritt erfolgt eine Erweiterung der Bohrung im Bereich des harten Deckknochens des Unterkiefers, der Corticalis, mittels eines weiteren Spiralbohrers größeren Durchmessers. Dieses Aufbohren beschränkt sich ausschließlich auf den harten Deckknochen, wobei der Durchmesser des Bohrers so gewählt ist, daß die Öffnung im Kiefer einen zur Durchführung des nächsten oder mehrerer der nächsten Arbeitsschritte erforderlichen Durchmesser erhält. Insgesamt gesehen wird durch die erforderlichen Bohrungen nur eine geringe Menge an Kochengewebe entfernt.

Die weitere Aufbereitung des Implantatbettes erfolgt mit einem chirurgischen Instrument gemäß vorliegender Erfindung. Dieses Instrument umfaßt ein dornförmig ausgebildetes Bohrelement und einen daran befestigten Handgriff, wobei das Bohrelement im wesentlichen aus einen Kegelstumpf mit sehr geringem Öffnungswinkel und glatt ausgebildeter Mantelfläche besteht.

Voranzustellen ist, dass eine Aufweitung der Corticalis des Unterkiefers durch die Fachkreise als nicht möglich beachtet wird, da die Corticalis des Unterkiefers um ein Vielfaches (5-10x) dicker ist als die des Oberkiefers, wo derartige Arbeiten zur Vorbereitung des Einsatzes von Implantaten geläufig sind. Die vorliegende Erfindung steht hierzu im Widerspruch, denn sie ermöglicht bei Verwendung des erfindungsgemäßen Instruments die Vornahme gleicher Arbeiten auch im Unterkiefer. Wichtig ist, dass der Dorn mit dem Griff einen Winkel einschließt. Ausdrücklich nicht umfaßt sind Instrumente, bei denen Dorn und Griff in die gleiche Richtung weisen auch bei Vorliegen einer Kröpfung des Zwischenstücks. Das Instrument muss vielmehr auch bei den hinteren Zähnen einen vertikalen Zugang im Unterkiefer zur Einbringung des Implantats ermöglichen. Hierzu ist die gewinkelte Gestalt unabdingbar.

Bei der Aufbereitung des Implantatbettes wird das vorgeschlagene chirurgische Instrument mit der Deckfläche des Kegelstumpfes voran in die gemäß oben beschriebener Verfahrensschritte hergestellte Öffnung im Unterkiefer des Patienten eingeführt. Das zum Einsatz kommende Instrument weist einen Durchmesser der Deckfläche des Kegelstumpfes auf, welcher ein Eindringen durch die erweiterte Bohrung in der Corticalis hindurch bis zu der sich anschließenden Spongiosa erlaubt. Bei einem weiteren Einführen des Instrumentes wird dann aufgrund der konischen Ausbildung des Bohrelementes die Bohrung aufgeweitet, wobei das angrenzende Kochengewebe radial nach außen gepreßt wird. Die Ausbildung des Konus mit einem geringen Konuswinkel und dessen glatt ausgebildeter Mantelfläche ermöglichen eine manuelle Einführung des Instrumentes ohne großen Kraftaufwand. Erfindungswesentlich hierbei ist, daß der Handgriff des vorgeschlagenen Instrumentes im Winkel zur Achse des Kegelstumpfes angeordnet ist. Dadurch ist beim Arbeiten mit dem Instrument eine optimale Stellung der den Griff umfassenden Hand und des Bohrelementes relativ zur Öffnung im Unterkiefer gewährleistet. Weiter kann durch sukzessive Änderung der Richtung des Instrumentes, also dessen Eindringsektor bzw. Achsneigung, eine Verbreiterung und auch Aufrichtung gelöster Segmente erreicht werden. Durch diese Handhabung wird nicht nur sukzessive der Durchmesser in der Spongiosa sondern auch die Achsneigung, also Richtung, gleichzeitig mit der Dehnung beeinflusst. Dabei ist bevorzugt, eine Orientierung in Richtung des Knochenmangels, in der Regel nach bukkal und labial vorzunehmen.

Der Aufweitungsvorgang wird in der Regel mit weiteren Instrumenten gleicher Ausbildung wiederholt, deren Kegelstumpf jedoch jeweils eine Deckfläche größeren Durchmessers aufweist als das jeweils zuvor benutzte Instrument. Jeder dieser Arbeitsschritte führt dazu, daß das Knochengewebe im Bereich der Implantation zunehmend verdichtet wird. Wie die Praxis gezeigt hat, behält das Knochengewebe diese höhere Dichte auch nach Abschluß des Heilungsprozesses bei. Das Implantatbett erhält infolge der vorgeschlagenen Aufbereitung in vorteilhafter Weise daher eine wesentlich höhere Stabilität, als die nach herkömmlichen Verfahren durch Bohren hergestellte Betten aufweisen.

Aus der lokalen Verbesserung der Knochenqualität resultiert auch ein weiterer bedeutender Vorteil, der darin besteht, daß hierdurch Implantationen in Bereichen des Kiefers möglich werden, welche ohne Aufbereitung aufgrund unzureichender Knochenqualität nicht durchführbar sind. Darüber hinaus stellt die Herstellung des Implantatbettes und die Anwendung der Instrumente gemäß vorliegendem Vorschlag für den Patienten einen Eingriff mit vergleichsweise geringer traumatischer Wirkung dar. Das vorgeschlagene Verfahren weist zudem eine Ausheilung der Implantationsstelle in kurzer Zeit und eine hohe Erfolgsquote auf.

Bei einer vorteilhaften Weiterbildung des Instrumentes gemäß vorliegender Erfindung umfaßt das Bohrelement wenigstens einen weiteren Kegelstumpf, der sich koaxial an den ersten Kegelstumpf anschließt. Dabei weist die Deckfläche des weiteren Kegelstumpfes zur Grundfläche des vorhergehenden Kegelstumpfes und besitzt einen größeren Durchmesser als die Grundfläche des vorhergehenden Kegelstumpfes. Instrumente dieser Ausbildung ermöglichen in einem Arbeitsgang die Anwendung von Kegelstümpfen mit wachsendem Durchmesser zur Aufweitung des Implantatbettes. Insbesondere kann durch den weiteren Kegelstumpf der Eintritt in die Implantationsbohrung so weit aufgeweitet werden, daß deren Durchmesser dem Deckenflächendurchmesser des Kegelstumpfes des nachfolgend eingesetzten Instrumentes entspricht. Das nachfolgend angewandte Instrument läßt sich hierdurch in vorteilhafter Weise wesentlich leichter ansetzen, da es durch die vorgegebene Ansenkung der Implantationsbohrung exakt zentriert wird.

Bei der Ausgestaltung der Instrumentenspitze werden im Rahmen vorliegender Erfindung zwei Varianten vorgeschlagen, bei denen der erste Kegelstumpf im Bereich von dessen Deckfläche durch eine zur Kegelachse rotationssymmetrische Fläche abgeschlossen ist. Die beiden Varianten unterscheiden sich dadurch, daß bei der ersten die genannte Fläche konvex ausgebildet ist, während bei der zweiten Varianten diese Fläche eine konkave Form aufweist und eine vergleichsweise scharfe Schnittkante mit der Mantelfläche des Kegelstumpfes bildet.

Instrumente mit einer Ausbildung der Instrumentenspitze gemäß der ersten Variante werden in der Regel dann eingesetzt, wenn das Ziel bei der Aufbereitung des Implantatbettes im Wesentlichen eine Verdichtung des seitlich vom Bett liegenden Knochengewebes ist.

Die Ausführung des Instrumentes gemäß Variante zwei hingegen ermöglicht eine Anhäufung von Knochengewebe am Grunde der Impantationsbohrung. Diese Anhäufung wird dadurch erzielt, daß bei Einführung von Instrumenten dieser Ausprägung in die Implantationsbohrung aufgrund der scharf ausgebildete Kante zwischen der genannten konkav ausgebildeten Fläche und dem Kegelmantel Knochengewebe von den Wänden der Bohrung abgetragen wird. Dabei sammelt sich das gelöste Gewebe in der Mulde der konkav ausgebildeten Fläche und wird schließlich am Grund der Bohrung verdichtet.

Mit einem Instrument gemäß Variante zwei läßt sich somit die Knochenqualität sowohl im Bereich der Seitenwände des lmplantatbettes als auch im Bereich von dessen Grund verbessern. Die vorteilhafte Folge hiervon ist ein besonders stabiles Implantatbett, das den Implantaten einen sehr festen Halt verleiht und auch bei verminderter Knochenqualität gute Ergebnisse bringt.

Besondere Bedeutung kommt bei vorliegender Erfindung der Anordnung des Handgriffes zu. Wie bereits erwähnt, ist der Griff des erfindungsgemäßen Instrumentes im Winkel zur Achse des Kegelstumpfes / der Kegelstümpfe angeordnet. Im Rahmen vorliegender Erfindung sind insbesondere Winkel von ca.70 Grad, ca. 80 Grad, ca. 90 Grad oder ca. 100 Grad vorgesehen. Die jeweiligen Instrumente kommen mit Vorteil zum Einsatz, wenn Implantationen im Bereich der Molaren, der Prämolaren oder der Front- oder Eckzähne vorzunehmen sind. Dabei werden die Instrumente mit
- einem um 70 Grad abgewinkelten Handgriff jeweils bei den Molaren, Position 6 oder 7,
- einem um 80 Grad abgewinkelten Handgriff jeweils bei den Prämolaren
- und einem um 90 Grad abgewinkelten Handgriff jeweils bei den Frontzähnen oder Eckzähnen
eingesetzt.

Bei einer bevorzugten Weiterbildung des vorgeschlagenen chirurgischen Instrumentes ist der Winkel zwischen Handgriff und Achse des ersten Kegelstumpfes einstellbar ausgebildet. Diese Ausbildung ermöglicht es, die Stellung des Handgriffes jeweils optimal an den jeweils vorliegenden Implantationsort anzupassen. Hierdurch können in vorteilhafter Weise mit einem Instrument unterschiedliche Implantationsorte, wie der Bereich der Molaren, der Prämolaren oder der Front- oder Eckzähne, abgedeckt werden. Der für diese Einsätze jeweils optimale Winkel von 70, 80 oder 90 Grad wird zu Beginn der Implantation einfach am Instrument eingestellt. Die Anzahl unterschiedlicher Instrumente und damit der zur Verwahrung notwendige Platzbedarf wird hierdurch in vorteilhafter Weise reduziert.

Bei der Ausbildung des Handgriffs selbst wird gemäß vorliegender Erfindung eine Lösung bevorzugt, bei welcher der Handgriff lösbar am Bohrelement befestigt ist. Dabei wird empfohlen, die Vorrichtung zur Festlegung so zu gestalten, daß sie ein Ein- und Ausrasten des Griffes ermöglicht. Diese Ausführung führt in vorteilhafter Weise ebenfalls zu einer Reduzierung des Platzbedarfs für die Verwahrung der Instrumente.

Bei der Aufbereitung des Implantatbettes wird der Aufweitungsvorgang in der Regel in mehreren Schritten durchgeführt. Erfindungsgemäß ist daher vorgesehen, Instrumente mit an sich gleicher Ausbildung mit unterschiedlichen Durchmessern der Kegelstümpfe auszustatten. Dementsprechend steht bei Instrumenten mit einem einstellbarem Winkel zwischen Handgriff und Kegelstumpfachse zur Aufweitung ein Satz von vorzugsweise 5 Instrumenten zur Verfügung, bei Instrumenten mit festem Winkel zwischen Handgriff und Kegelstumpfachse hingegen zu jedem vorgegebenen Winkel jeweils ein Satz von vorzugsweise 5 Instrumenten. Hierbei bilden die Instrumente eines Satzes eine Folge mit zueinander abgestuften Durchmessern der einander entsprechenden Kegelstümpfe, wobei das in dieser Folge jeweils nächste Instrument einen Deckflächendurchmesser des ersten Kegelstumpfes aufweist, der kleiner/gleich dem Grundflächendurchmesser des letzten Kegelstumpfes des in dieser Folge jeweils vorangehenden Instrumentes ist. Die Instrumente der vorgeschlagenen Sätze decken somit lückenlos alle Durchmesser ab, die vom ersten bis zum letzten Aufweitungsschritt erforderlich sind.

Bei der Aufbereitung des Implantatbettes ist es notwendig, daß der den Eingriff durchführende Chirurg jederzeit erkennen kann, wie weit das zur Aufweitung genutzte Instrument in die Implantationsbohrung eingeführt ist. Bei einer bevorzugten Ausführungsform des Instrumentes gemäß vorliegender Erfindung sind daher auf den Mantelflächen der Kegelstümpfe Markierungen angebracht, welche den Abstand zur Instrumentenspitze angeben. Beispielsweise wird durch einen einfachen Ring ein erster Abstand, durch eine Gruppe von zwei Ringen ein zweiter Abstand, durch eine Gruppe von drei Ringen ein dritter Abstand usw. gekennzeichnet. Die Art der Markierung ist dabei auf allen Instrumenten eines jeden Satzes jeweils gleich ausgeführt, so daß ein eindeutiger Rückschluß von der Markierung auf den Abstand zur Instrumentenspitze möglich ist.

Wie bereits ausgeführt umfaßt vorliegende Erfindung auch ein Verfahren zur knochenschonenden Herstellung eines Implantatbettes im Unterkiefer unter Verwendung von Spiralbohrern mit Innenkühlung und wenigstens eines chirurgischen Instrumentes gemäß vorliegender Erfindung. Die einzelnen Verfahrensschritte sind im Zusammenhang mit der Beschreibung des erfindungsgemäßen chirurgischen Instrumentes bereits dargelegt worden.

Wesentlich bei vorliegendem Verfahren ist die wiederholt durchgeführte Aufweitung der lmplantationsöffnung in der Spongiosa mittels des vorgeschlagenen chirurgischen Instrumentes. Hierbei ist gemäß einem Merkmal der Erfindung ein weiterer Verfahrensschritt vorgesehen, bei welchem im Bereich der lmplantationsöffnung eine vertikale Osteotomie distal oder mesial aufwärts durchgeführt wird. Der Zweck dieser chirurgischen Maßnahme ist es, eine Sollbruchstelle in der Knochenschale zu schaffen, welche beim Aufweiten der Öffnung aufbricht. Sie führt dazu, daß im Verlauf der Aufbereitung des Implantatbettes lokal auch die Knochenschale geringfügig nach außen hin verschoben wird, so daß die Implantationsöffnung bis zum erforderlichen Durchmesser aufgeweitet werden kann. Der Schnitt in der Knochenschale füllt sich im Verlauf des Heilungsprozesses zunächst mit Kallusgewebe, das durch fortschreitenden Mineralisierung jedoch wieder zu Knochengewebe erstarkt.

Der dargelegte Verfahrensschritt ist insbesondere dann vorgesehen, wenn die vorhandenen Anatomie des Unterkiefers keine ausreichende Aufweitung des Implantatbettes zuläßt. Er führt im Sinne der Implantologie zu einer lokalen Verbesserung der Anatomie und ermöglicht somit auch eine stabile Verankerung von Implantaten bei anatomisch problematischen Fällen.

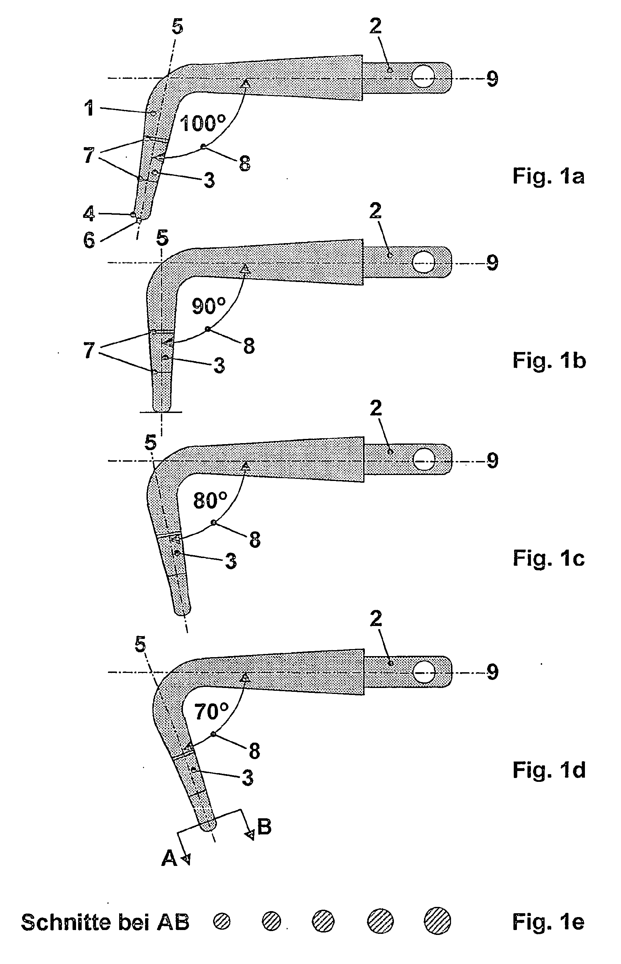

Weitere Einzelheiten, Merkmale und Vorteile der Erfindung lassen sich dem nachfolgenden Teil der Beschreibung entnehmen. In diesem Teil wird ein Ausführungsbeispiel des erfindungsgemäßen chirurgischen Instrumentes anhand einer Zeichnung erläutert. Es zeigen
- Fig. 1a - 1d:: Varianten des Instrumentes zur Aufbereitung des Implantatbettes
- Fig. 1e:: Durchmesser an der Spitze des Instrumentes von 5 zu einem Satz gehörenden Instrumenten

Den Figuren 1a-1d liegen 4 Varianten des chirurgischen Instrumentes zugrunde. Dargestellt ist jeweils der Kopf des Instrumentes im Seitenriß. Er umfaßt jeweils ein dornförmig ausgebildetes Bohrelement 1 und eine Vorrichtung 2 zur lösbaren Befestigung eines nicht dargestellten Handgriffes. Bei vorliegender Ausführungsform besteht das Bohrelement 1 jeweils aus einen Kegelstumpf 3 mit sehr geringem Öffnungswinkel und glatt ausgebildeter Mantelfläche. Die Instrumentenspitze 4 wird durch eine zur Achse 5 des Kegelstumpfes 3 rotationssymmetrisch ausgebildete Fläche 6 mit konvexer Wölbung gebildet. Mit dem Bezugszeichen 7 sind Markierungen auf der Mantelfläche des Kegelstumpfes 3 gekennzeichnet, welche den Abstand zur Spitze 4 des Instrumentes angeben.

Bei den chirurgischen Instrumenten gemäß vorliegender Erfindung ist der Handgriff im Winkel 8 zur Achse 5 des Kegelstumpfes 3 angeordnet. Wie in den Figuren 1a -1d wiedergegeben, sind insbesondere Winkel 8 von ca.100 Grad, ca. 90 Grad, ca. 80 Grad oder ca. 70 Grad zwischen der Achse 9 der Befestigungsvorrichtung und der Achse 5 des Kegelstumpfes 3 vorgesehen. Derart ausgebildete Instrumente kommen mit Vorteil zum Einsatz, wenn Implantationen im Bereich der Molaren, der Prämolaren oder der Front- oder Eckzähne vorzunehmen sind. Der abgewinkelte Handgriff ermöglicht hierbei jeweils eine optimale Stellung der den Griff umfassenden Hand und des Bohrelementes relativ zur Implantationsöffnung im Unterkiefer.

Instrumente des dargestellten Typs mit konvex geformter Spitzen 4 werden in der Regel eingesetzt, wenn eine Verdichtung des dem Implantatbett benachbarten Knochengewebes angestrebt wird. Zur Aufbereitung des Implantatbettes wird das chirurgische Instrument mit der Instrumentenspitze 4 voran in die zuvor durch Bohren hergestellte (nicht dargestellte) Öffnung im Unterkiefer des Patienten eingeführt. Durch moderaten händischen Druck auf das Instrument wird hierbei die Bohrung aufgrund der konischen Form des Kegelstumpfes 3 aufgeweitet, wobei das angrenzende Kochengewebe radial nach außen gepreßt wird.

Die Aufweitung des Implantatbettes wird in der Regel in mehreren Schritten durchgeführt. Erfindungsgemäß ist daher vorgesehen, Instrumente mit an sich gleicher Ausbildung mit unterschiedlichen Durchmessern der Kegelstümpfe 3 auszustatten. Zu jedem der in Figur 1a - 1 d dargestellten Instrumenttypen existiert dementsprechend ein Satz von vorzugsweise 5 Instrumenten, deren Spitzen 4 die in Figur 1e dargestellten Querschnitte aufweisen. Die wiedergegebenen Querschnitte liegen jeweils in dem Bereich des Instrumentes, welcher in Figur 1d durch die Schnittlinie AB angedeutet ist. Wie die Praxis gezeigt hat, behält das Knochengewebe die durch Aufweitung des Implantatbettes erzielte höhere Dichte auch nach Abschluß des Heilungsprozesses bei und verleiht daher den Implantaten einen sehr festen Halt.

## Patentansprüche

1. Chirurgisches Instrument zur Aufbereitung von Implantatbetten im Unterkiefer mit einem dornförmig ausgebildeten Bohrelement (1) und einem daran befestigten Handgriff, wobei
- das Bohrelement (1) einen ersten Kegelstumpf (3) umfaßt,
- dessen Mantellinie einen Winkel von maximal einigen Graden mit der Achse (5) des Kegelstumpfes (3) einschließt,
- und dessen Mantelfläche glatt ausgebildet ist
**dadurch gekennzeichnet, daß**
- der Handgriff in einem Winkel (8) zur Achse (5) des genannten Kegelstumpfes (3) angeordnet ist.

2. Chirurgisches Instrument nach Anspruch 1, **dadurch gekennzeichnet, daß**
- das Bohrelement (1) wenigstens einen weiteren Kegelstumpf umfaßt,
- der sich koaxial an den ersten Kegelstumpf (3) anschließt,
- wobei die Deckfläche des weiteren Kegelstumpfes
- zur Grundfläche des vorhergehenden Kegelstumpfes weist
- und einen größeren Durchmesser als die Grundfläche des vorhergehenden Kegelstumpfes besitzt.

3. Chirurgisches Instrument nach Anspruch 1 oder 2, **dadurch gekennzeichnet, daß**
- der erste Kegelstumpf (3) im Bereich (4) von dessen Deckfläche durch eine zur Kegelachse rotationssymmetrische Fläche (6) abgeschlossen ist,
- welche entweder konkav ausgebildet ist und eine vergleichsweise scharfe Schnittkante mit der Mantelfläche des Kegelstumpfes bildet,
- oder konvex ausgebildet ist.

4. Chirurgisches Instrument nach einem der Ansprüche 1 - 3, **dadurch gekennzeichnet, daß**
- der Winkel (8) zwischen Handgriff und Achse (5) des ersten Kegelstumpfes (3)
- entweder ca. 70 Grad
- oder ca. 80 Grad
- oder ca. 90 Grad
- oder ca. 100 Grad
beträgt.

5. Chirurgisches Instrument nach einem der Ansprüche 1- 4, **dadurch gekennzeichnet, daß**
- der Winkel (8) zwischen Handgriff und Achse (5) des ersten Kegelstumpfes (3) einstellbar ist.

6. Chirurgisches Instrument nach einem der Ansprüche 1 - 5, **dadurch gekennzeichnet, daß**
- der genannte Handgriff lösbar am genannten Bohrelement (1) befestigt ist.

7. Chirurgisches Instrument nach einem der Ansprüche 1 - 6, **dadurch gekennzeichnet, daß**
- bei Instrumenten,
- bei denen der genannte Winkel (8) einstellbar ist, ein Satz von vorzugsweise 5 Instrumenten vorgesehen ist oder
- bei denen der genannte Winkel (8) fest vorgegeben ist, zu jedem vorgegebenen Winkel (8) jeweils ein Satz von vorzugsweise 5 Instrumenten vorgesehen ist,
- wobei die Instrumente eines Satzes eine Folge mit zueinander abgestuften Durchmessern der einander entsprechenden Kegelstümpfe bilden,
- und das in dieser Folge jeweils nächste Instrument einen Deckflächendurchmesser des ersten Kegelstumpfes aufweist, der kleiner/gleich dem Grundflächendurchmesser des letzten Kegelstumpfes des in dieser Folge jeweils vorangehenden Instrumentes ist.

8. Chirurgisches Instrument nach einem der Ansprüche 1 - 7, **dadurch gekennzeichnet, daß**
- auf den Mantelflächen der Kegelstümpfe Markierungen (7) angebracht sind,
- welche den Abstand zu dem im Bereich der Deckfläche des ersten Kegelstumpfes liegenden Ende (4) des Instrumentes angeben.

## Claims

1. Surgical instrument for preparing implant beds in the lower jaw comprising a spinous drilling element (1), and a handle fixed thereto,
- the drilling element (1) comprising a first truncated cone, whose outer surface line encloses an angle of at most several degrees with the axis (5) of the truncated cone (3) and whose outer surface line is designed so as to be smooth,
**characterised in that**
- the handle is arranged at an angle (8) to the axis (5) of the aforementioned truncated cone (3).

2. Surgical instrument according to claim 1, **characterised in that**
- the drilling element (1) comprises at least one further truncated cone
- which is coaxially contiguous with the first truncated cone (3)
- the top surface of the further truncated cone
- facing the base surface of the previous truncated cone
- and having a larger diameter than the base surface of the preceding truncated cone.

3. Surgical instrument according to claim 1 or 2, **characterised in that**
- the first truncated cone (3) is terminated in the region (4) of its top surface by a surface (6) which is rotationally symmetrical with respect to the cone axis,
- and which is either designed so as to be concave and forms a comparatively sharp cutting edge with the circumferential surface of the truncated cone,
- or is designed so as to be convex.

4. Surgical instrument according to one of claims 1-3, **characterised in that**
- the angle (8) between the handle and axis (5) of the first truncated cone (3) is
- either approx. 70 degrees
- or approx. 80 degrees
- or approx. 90 degrees
- or approx. 100 degrees.

5. Surgical instrument according to one of claims 1-4, **characterised in that**
- the angle (8) between the handle and axis (5) of the first truncated cone (3) is adjustable.

6. Surgical instrument according to one of claims 1-5, **characterised in that**
- the said handle is detachably fixed to the said drilling element (1).

7. Surgical instruments according to one of claims 1-6, **characterised in that**
- in the case of instruments
- in which the aforementioned angle (8) is adjustable, a set of preferably 5 instruments is provided, or
- in which the said angles (8) are fixed, a set of preferably 5 instruments being provided for each predetermined angle (8)
- the instruments of a set forming a sequence with graded diameters of corresponding truncated cones
- and the respective succeeding instrument in this series having a top surface diameter of the first truncated cone, which is smaller than/equal to the base surface diameter of the last truncated cone of the respective preceding instrument in this series.

8. Surgical instrument according to one of claims 1-7, **characterised in that**
- marks (7) are produced on the circumferential surfaces of the truncated cones
- which indicate the distances to that end (4) of the instrument that lies in the region of the top surface of the first truncated cone.

## Revendications

1. Instrument chirurgical pour la préparation de lits d'implants dans le maxillaire inférieur avec un élément de forage (1) ayant la forme d'un mandrin et une poignée qui y est fixée, sachant que
• l'élément de forage (1) comprend un premier cône tronqué (3),
i. dont la ligne extérieure inclut un angle de quelques degrés au plus avec l'axe (5) du cône tronqué (3),
ii. et dont la surface extérieure est exécutée de façon lisse
**caractérisé par le fait que**
• la poignée est disposée avec un certain angle par rapport à l'axe (5) du cône tronqué (3) cité.

2. Instrument chirurgical selon la revendication 1, **caractérisé par le fait que**
• l'élément de forage (1) comprend au moins un autre cône tronqué,
i. qui est raccordé de façon coaxiale au premier cône tronqué (3),
ii. est orienté vers la face inférieure du cône tronqué précédent
iii. et possède un diamètre plus grand que la face inférieure du cône tronqué précédent.

3. Instrument chirurgical selon la revendication 1 ou 2, **caractérisé par le fait que**
• le premier cône tronqué (3) est raccordé dans la zone (4) de sa face supérieure par une surface (6) symétrique par rapport à l'axe conique du point de vue de la rotation,
• ou a une forme convexe.

4. Instrument chirurgical selon un des revendications 1- 3, **caractérisé par le fait que**
• l'angle (8) entre la poignée et l'axe (5) du premier cône tronqué (3) s'élève
i. à env. 70 degrés
ii. ou à env. 80 degrés
iii. ou à env. 90 degrés
iv. ou à env. 100 degrés.

5. Instrument chirurgical selon une des revendications 1-4, **caractérisé par le fait que**
• l'angle (8) entre la poignée et l'axe (5) du premier cône tronqué (3) est réglable.

6. Instrument chirurgical selon une des revendications 1- 5, **caractérisé par le fait que**
• la poignée citée est fixée de façon démontable sur l'élément de forage (1) cité.

7. Instrument chirurgical selon une des revendications 1-6, **caractérisé par le fait que**
• pour des instruments,
• dans lesquels l'angle cité (8) est réglable, un jeu de 5 instruments de préférence est prévu, ou
• pour lesquels l'angle cité (8) est donné de façon fixe, un jeu de 5 instruments de préférence est prévu pour chaque angle prescrit (8),
• sachant que les instruments d'un jeu forment une suite avec des diamètres constituant des paliers correspondants les uns aux autres des cônes tronqués correspondants,
• et que chaque instrument suivant de cette suite présente un diamètre de la face supérieure du premier cône tronqué qui est inférieur ou égal au diamètre de la face inférieure du dernier cône tronqué de chaque instrument précédent dans cette suite.

8. Instrument chirurgical selon une des revendications 1 - 7, **caractérisé par le fait que**
• des marquages (7) sont réalisés sur les faces extérieures des cônes tronqués,
• qui indiquent la distance de l'extrémité (4) se trouvant dans la zone de la face supérieure du premier cône tronqué de l'instrument.
